(19) **Europäisches Patentamt / European Patent Office / Office européen des brevets**

(11) **EP 2 258 752 A1**

(12) **EUROPEAN PATENT APPLICATION**
published in accordance with Art. 153(4) EPC

(43) Date of publication:
**08.12.2010 Bulletin 2010/49**

(51) Int Cl.:
**C08J 7/00** (2006.01)

(21) Application number: **09725296.9**

(22) Date of filing: **19.01.2009**

(86) International application number:
**PCT/JP2009/050682**

(87) International publication number:
**WO 2009/119144 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **26.03.2008 JP 2008081274**

(71) Applicant: **Kureha Corporation**
**Chuo-ku**
**Tokyo 103-8552 (JP)**

(72) Inventors:
- **YAMANE, Kazuyuki**
  **Chuo-ku**
  **Tokyo 1038552 (JP)**
- **SAITOU, Takeshi**
  **Chuo-ku**
  **Tokyo 1038552 (JP)**
- **HOKARI, Yuki**
  **Chuo-ku**
  **Tokyo 1038552 (JP)**

(74) Representative: **HOFFMANN EITLE**
**Patent- und Rechtsanwälte**
**Arabellastraße 4**
**81925 München (DE)**

(54) **METHOD FOR PRODUCING POLYMER MOLDED BODY**

(57) A method for producing a polymer molded body, comprising a step of forming a recess in a polymer structure containing a polyglycolic acid by dry etching the polymer structure at a vacuum degree of 50 mTorr or less, an output of 1-6 W and a current of 3 mA or less.

Fig.2

## Description

### Technical Field

The present invention relates to a method for producing a polymer molded body.

### Background Art

Organic polymer materials are molded into various shapes such as films, fibers, sheets and particles for use in a variety of fields, according to their characteristic mechanical properties such as elastic modulus and strength, chemical properties such as solvent solubility, hydrophilicity and hydrophobicity, and thermal properties such as heat resistance. Methods of forming pores in structures composed of organic polymer materials are also being studied.

Patent documents 1-3, for example, disclose the use of photoresists with different patterns as masks for etching of organic polymer structures such as polyimide films. Also, Patent documents 4 and 5 disclose methods of forming pores in embossed sections of plastic films. Patent document 6 discloses a method of forming through-holes in a plastic sheet having a surface provided with a metal foil with an opening, by irradiation with excimer laser light. Patent document 7 discloses a method of forming micropores in a thin sheet material by fluid sound waves.

[Patent document 1] JP 09-296057 A
[Patent document 2] JP 2001-305750 A
[Patent document 3] JP 60-111243 A
[Patent document 4] JP 62-267336 A
[Patent document 5] JP 05-86216 A
[Patent document 6] JP 05-15987 A
[Patent document 7] JP 06-198598 A

### Disclosure of the Invention

Problems to be Solved by the Invention

With the methods described in these patent documents, however, it is difficult to etch and form recesses in polyglycolic acid-containing polymer structures. Moreover, the methods described in Patent documents 1-3 employ wet etching and therefore present the problem of waste solvent treatment. The methods described in Patent documents 4-7 tend to entail complex steps for pore formation.

It is an object of the present invention to provide a method for producing a polymer molded body that can form recesses in a polymer structure containing a polyglycolic acid, as well as a polymer molded body obtained by the method.

Means for Solving the Problems

The invention provides a method for producing a polymer molded body, comprising a step of forming a recess in a polymer structure containing a polyglycolic acid by dry etching the polymer structure at a vacuum degree of 50 mTorr or less, an output of 1-6 W and a current of 3 mA or less.

The present inventors have carefully studied etching methods for polymer structures containing polyglycolic acid, and as a result have completed this invention upon finding that if the etching conditions are selected, it is possible to satisfactorily etch only polyglycolic acid without etching the polymer components other than polyglycolic acid. With this production method, it is possible to form recesses in a polymer structure containing polyglycolic acid, by a simple process without the complex steps of the prior art and without generating waste liquid as with wet processes. In addition, when the polymer structure consists entirely of a polyglycolic acid, etching through a mask with a prescribed pattern can produce a polymer molded body having recesses formed at locations corresponding to the openings of the mask. Also, when the polymer structure comprises a polyglycolic acid and a polymer component other than polyglycolic acid, the polyglycolic acid sections alone, near the surface of the polymer structure, are selectively etched to allow formation of a polymer molded body with recesses.

The dry etching in this production method is preferably argon ion etching. Argon ion etching is highly suitable for etching in the perpendicular direction, and therefore allows formation of a polymer molded body having recesses ordered in the etching shape (minimal side etching), under mild conditions.

The present invention further provides a polymer molded body obtainable by the method for producing polymer molded body described above. When the polymer structure consists entirely of a polyglycolic acid, the polyglycolic acid being a biodegradable polymer, the polymer molded body with recesses formed therein may be used as a viable cell culture substrate.

## Effects of Invention

According to the invention it is possible to provide a method for producing a polymer molded body that can form recesses in a polymer structure containing a polyglycolic acid, as well as a polymer molded body obtained by the method.

## Brief Description of the Drawings

Fig. 1 is a perspective view of an embodiment of a polymer molded body obtained by the production method of the invention.
Fig. 2 is a process drawing showing a perspective view of an embodiment of the method for producing a polymer molded body according to the invention.
Fig. 3 is a schematic view of a plain weave mesh.
Fig. 4 is an SEM photograph of the PGA molded body obtained in Example 1, taken from the etching surface.
Fig. 5 is an SEM photograph of the PGA molded body obtained in Example 7, taken from the etching surface.
Fig. 6 is an SEM photograph of the PGA/PET molded body obtained in Example 11, taken from the etching surface.
Fig. 7 is an SEM photograph of the PGA/PP molded body obtained in Example 12, taken from the etching surface.
Fig. 8 is an SEM photograph of the PGA/PLA molded body obtained in Example 13, taken from the etching surface.
Fig. 9 is an SEM photograph of the etched PVDF film obtained in Comparative Example 5, taken from the etching surface.

Explanation of Symbols

1: Polymer molded body, 2: polymer structure, 3: recess, 4: first mask, 6: second mask, 8: dry etching apparatus, 10: plain weave mesh, 12: aperture, 14: filament diameter.

## Best Modes for Carrying Out the Invention

Preferred embodiments of the invention will now be explained in detail, with reference to the accompanying drawings as necessary. Throughout the drawings, corresponding elements will be referred to by like reference numerals and will be explained only once. Unless otherwise specified, the vertical and horizontal positional relationships are based on the positional relationships in the drawings. Also, the dimensional proportions depicted in the drawings are not necessarily limitative.

The method for producing a polymer molded body according to the invention comprises a step forming a recess in a polymer structure containing a polyglycolic acid by dry etching the polymer structure at a vacuum degree of 50 mTorr or less, an output of 1-6 W and a current of 3 mA or less.

The polymer structure is a polyglycolic acid-containing polymer shaped into a film, sheet or board, depending on the purpose of use.

Polyglycolic acid (hereunder, "PGA") contains a glycolic acid homopolymer composed entirely of repeating units of glycolic acid represented by $-(O-CH_2-CO)-$, or a glycolic acid copolymer including the aforementioned glycolic acid repeating unit. When the polyglycolic acid is a glycolic acid copolymer, the repeating unit is included at preferably 50 wt% or greater, more preferably 75 wt% or greater, even more preferably 90 wt% or greater and most preferably 99 wt% or greater.

The glycolic acid copolymer is obtained by copolymerizing glycolic acid monomer with a comonomer, for example, a cyclic monomer such as ethylene oxalate (1,4-dioxane-2,3-dione), a lactide, a lactone (for example, β-propiolactane, β-butyralactone, β-pivalolactone, γ-butyrolactone, δ-valerolactone, β-methyl-o-valerolactone or ε-caprolactone), a carbonate (for example, trimethylene carbonate), an ether (for example, 1,3-dioxane), an ether ester (for example, dioxanone) or an amide (for example, ε-caprolactam); or a hydroxycarboxylic acid such as lactic acid, 3-hydroxypropanoic acid, 3-hydroxybutanoic acid, 4-hydroxybutanoic acid or 6-hydroxycaproic acid or an alkyl ester thereof; an aliphatic diol such as ethylene glycol or 1,4-butanediol; an aliphatic dicarboxylic acid such as succinic acid or adipic acid, or an alkyl ester thereof. The comonomer may be a single type or a combination of two or more types. When the polymer structure comprises a polyglycolic acid copolymer, it is possible to form a polymer molded body with the polyglycolic acid repeating unit sections selectively dry-etched.

The polymer structure may also be a polymer blend containing a polymer other than PGA, such as a polyimide, polyamide, polylactic acid, polypropylene, polyethylene terephthalate or polycarbonate. When the polymer structure contains a polymer other than PGA, it is possible to form a polymer molded body with the PGA sections on the polymer structure surface (etching surface) selectively dry etched to form recesses.

The polymer structure is more preferably in the form of a film from the viewpoint of facilitating dry etching. In this case, the film thickness is preferably 0.1-500 $\mu$m, more preferably 1-200 $\mu$m and even more preferably 2-50 $\mu$m. A polymer film thickness of less than 0.1 $\mu$m will tend to be poorly manageable, while a thickness of greater than 500 $\mu$m will tend to lengthen the etching time and hamper formation of recesses.

A specific method for forming recesses in a polymer structure comprising only polyglycolic acid will now be explained.

The term "recess" used throughout the present specification refers to a depression or indentation, or a perforation formed in the film thickness direction of the polymer structure by etching of the surface of the polymer structure. Any of these may be formed in the polymer molded body that is obtained by the production method of the invention.

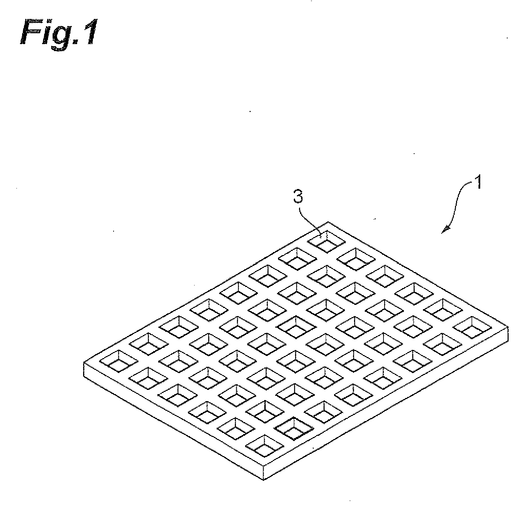

Fig. 1 is a perspective view of an embodiment of a polymer molded body obtained by the production method of the invention. The polymer molded body 1 shown in Fig. 1 is in the shape of a film, and a plurality of recesses 3 are formed in the direction of its thickness. The recesses 3 are independently and regularly arranged.

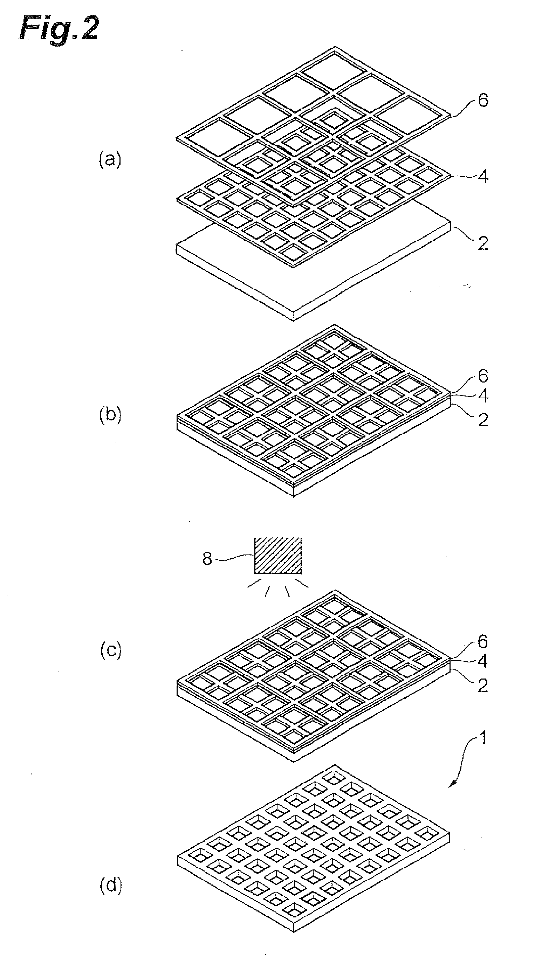

The polymer molded body 1 shown in Fig. 1 can be formed by the process illustrated in Fig. 2. Fig. 2 is a process drawing showing a perspective view of an embodiment of the method for producing a polymer molded body 1 according to the invention. First, a polymer structure 2, a first mask 4 and second mask 6, having prescribed openings, are prepared (Fig. 2(a)). Next, the first mask 4 and second mask 6 are laminated in that order on the polymer structure 2 (Fig. 2(b)). The second mask 6 is then exposed to reactive gas or the like from a dry etching apparatus 8 for dry etching of the polymer structure 2, to form recesses in the polymer structure 2 (Fig. 2(c)). Finally, the first and second masks are removed to produce a polymer molded body 1 (Fig. 2(d)).

A plurality of openings are formed in the first mask 4 and second mask 6. According to the invention, the mean opening diameter of the second mask 6 is preferably larger than the mean opening diameter of the first mask 4. The mean opening diameter is obtained by calculating the area of the opening formed on the surface, and determining the circular diameter of the opening area. The mean opening diameter of the second mask 6 is preferably 5-100 times, more preferably 7-60 times and even more preferably 8-20 times the mean opening diameter of the first mask 4. If the mean opening diameter of the second mask 6 is less than 5 times or greater than 100 times the mean opening diameter of the first mask 4, the effect of the invention will not be as readily exhibited.

As specific values for the mean opening diameter, the mean opening diameter of the first mask is preferably 0.1-1000 $\mu$m and more preferably 1-100 $\mu$m. If the mean opening diameter of the first mask is less than 0.1 $\mu$m it will be difficult to form the recesses, and if it is greater than 100 $\mu$m the formed recesses be too large.

The mean opening diameter of the second mask is preferably 200-5000 $\mu$m and more preferably 400-2500 $\mu$m. If the mean opening diameter of the second mask is less than 200 $\mu$m it will be difficult to obtain recesses corresponding to the opening diameters of the first mask, and if it is greater than 5000 $\mu$m the contact between the first mask and polymer structure will tend to be reduced.

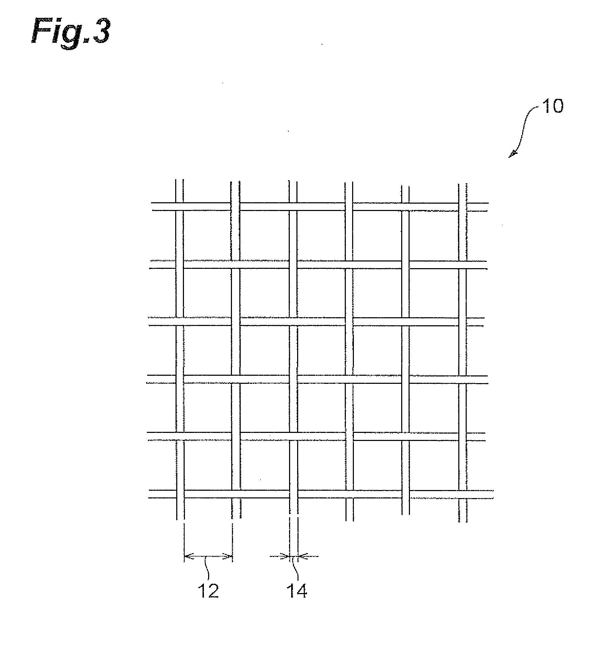

When plain weave mesh nets are used for the first and second masks, the "mesh number" may be indicated instead of the mean opening diameter. The mesh is the number of filaments of the mesh within 1 inch ($2.54 \times 10^4$ $\mu$m), and a larger mesh number corresponds to a finer mesh. Fig. 3 shows a schematic view of a plain weave mesh 10. In Fig. 3, the distance between filaments is the aperture 12, and the aperture 12 can be calculated from the mesh number and the filament diameter 14, as represented by the following formula (1). The aperture 12 roughly corresponds to the mean opening diameter, and a suitable mesh number may be selected based on the aperture.

$$\text{Aperture } (\mu m) = 2.54 \times 10^4 / \text{mesh number - filament diameter } (\mu m) \quad (1)$$

The materials of the first and second masks preferably have large selection ratios with the polymer structure 2 during etching, and for example, a silica-based, fluorine-containing polymer-based, metal-based, polyester-based or polyamzde-based mask may be used. According to the invention, from the viewpoint of etching selectivity, the first and second masks are preferably made of the same material and more preferably the first and second masks are metal masks of SUS or the like.

There are no particular restrictions on the thicknesses of the first and second masks, but since the second mask is used as a reinforcing material, the thickness of the second mask is preferably larger than the thickness of the first mask.

As mentioned above, preferably two masks with different mean opening diameters are used for the invention. By laminating the second mask on the first mask, it is possible to attach the first mask to the polymer structure. This can help maintain flatness of the first mask and polymer structure during dry etching, for more effective etching in the perpendicular direction. It also allows reliable formation of recesses of the desired size in the porous polymer structure, based on the openings diameters of the first mask.

(Etching conditions)

Dry etching, according to the invention, is a method of etching materials with reactive gas, ions, radicals or the like. The dry etching employed may be a known method, such as plasma etching, ion etching or focused ion beam etching.

Ion etching is a method of etching a solid surface using helium (He), argon (Ar), neon (Ne), or an inert gas comprising a combination of these. Reactive ion etching (RIE) is more preferred according to the invention, and argon ion etching using argon gas is even more preferred, because these allow perpendicular etching and can form recesses with regular etching shapes.

According to the invention, the dry etching is carried out at a degree of vacuum of 50 mTorr (6.7 Pa) or less. The degree of vacuum is preferably 30-50 mTorr and even more preferably 35-45 mTorr. With a degree of vacuum of greater than 50 mTorr, discharge will be generated and etching will be hampered. With a degree of vacuum of below 30 mTorr, on the other hand, the current value will be reduced and the Ar ion concentration lowered, tending to hamper etching.

The current value for dry etching is 3 mA or less, preferably 0.5-3 mA and more preferably 1-3 mA. With a current of more than 3 mA during etching, discharge will be generated and etching will be hampered.

The output during dry etching is 1-6 W, preferably 2-5 W and more preferably 3-4 W. With an output of more than 6 W during etching, discharge will be generated and etching will be hampered, and with an output of less than 1 W, a longer time will be required for formation of recesses.

The etching time is preferably from 0.5 to 60 minutes, more preferably 1-10 minutes and even more preferably 2-5 minutes. An etching time of shorter than 0.5 minute will not easily form recesses, while an etching time of longer than 60 minutes will not be very suitable for industrial production. Appropriate adjustment of the etching time can convert the recesses to perforations.

By appropriately setting the aforementioned conditions according to the invention, i.e. dry etching conditions with a vacuum degree of 50 mTorr or less, an output of 1-6 W and a current of 3 mA or less, it is possible to accomplish selective and satisfactory etching of PGA alone.

When the polymer structure consists entirely of PGA, a mask with a prescribed opening pattern is used during etching to obtain a PGA molded body having recesses ordered in the etching shape, corresponding to the opening pattern. Furthermore, because PGA is a biodegradable polymer, the obtained PGA molded body can be used as a culture substrate for viable cells.

On the other hand, with a polymer structure comprising a polymer other than PGA, such as polyimide, polyamide, polylactic acid, polypropylene, polyethylene terephthalate or polycarbonate, either no etching takes place or only etching of an extent that lightly shaves the surface takes place under the etching conditions described above, and no recesses are formed.

Therefore, when the polymer structure is a blend of a PGA and a polymer other than PGA, dry etching of the polymer structure can be accomplished directly without using the first and second masks. That is, when the polymer structure is a blend of a PGA and a polymer other than PGA, the polymer structure is subjected to dry etching by direct exposure of the polymer structure to reactive gas or the like from above from a dry etching apparatus, forming recesses in the polymer structure (not shown). In this case, the PGA sections alone, near the surface of the polymer structure, are selectively etched to form recesses. In this type of polymer structure, the polymer other than PGA serves the role as a mask so that the underlying PGA (interior of the polymer structure) is not etched.

The shapes of the recesses can be confirmed by observation of the surface and cross-section of the produced polymer molded body using a scanning electron microscope, or by measurement with a surface roughness meter.

Thus, according to the invention it is possible to produce a polymer molded body having recesses formed by the production method described above.

The invention was explained above in detail based on embodiments thereof. However, the invention is not limited to these described embodiments. The invention may also be applied in a variety of modifications so long as the gist thereof is maintained.

Examples

Preferred examples of the invention will now be explained in further detail. However, the invention is not limited to these examples.

(Example 1)

A sample was prepared by laminating a 300 mesh SUS mesh (trade name: "Twill Weave Wire Mesh" by Taiyo Wire Cloth Co., Ltd.) as the first mask and a 40 mesh SUS mesh (trade name: "Plain Weave Wire Mesh" by Taiyo Wire Cloth Co., Ltd.) as the second mask in that order on a 13.5 μm-thick polyglycolic acid (thereunder, "PGA") film. The sample was set in the bell jar of an etching apparatus (trade name: "IE-10" by Aikoh Engineering Co., Ltd.). After deaeration for 1 hour at approximately 6 mTorr, argon gas was injected in to control the degree of vacuum to about 40 mTorr (with adjustment of the argon gas injection rate to a voltage of 1.5 kV and a current value of 1.5 mA), while the PGA film was etched for 30 minutes from above a 40 mesh SUS mesh, to fabricate a PGA molded body.

(Examples 2-10)

PGA molded bodies were fabricated by the same procedure as Example 1, under the conditions shown in Table 1.

(Example 11)

A blend film of PGA and polyethylene terephthalate (hereunder abbreviated as "PET") (blend ratio: PGA/PET = 5/95 (parts by weight) was prepared, and were set in the bell jar of an etching apparatus (trade name: "IE-10" by Aikoh Engineering Co., Ltd.), without layering first and second masks. After deaeration for 1 hour at approximately 6 mTorr, argon gas was injected in to control the degree of vacuum to about 40 mTorr (with adjustment of the argon gas injection rate to a voltage of 1.5 kV and a current value of 1.5 mA), while the PGA/PET film was etched for 2 minutes, to fabricate a PGA/PET molded body.

(Example 12)

A PGA/PP molded body was fabricated under the conditions shown in Table 1 by the same procedure as Example 11, except for using a blend film of PGA and polypropylene (hereunder abbreviated as "PP") (blend ratio: PGA/PP = 20/80 (parts by weight)).

(Example 13)

A PGA/PLA molded body was fabricated under the conditions shown in Table 1 by the same procedure as Example 11, except for using a blend film of PGA and polylactic acid (hereunder abbreviated as "PLA") (blend ratio: PGA/PLA = 25/75 (parts by weight)).

(Comparative Examples 1 and 2)

Fabrication of PGA molded bodies under the conditions shown in Table 1 was attempted, by the same procedure as Example 1.

(Comparative Example 3)

It was attempted to fabricate a PET molded body under the conditions shown in Table 1 by the same procedure as Example 11, except for using a PET film (trade name: TETRON FILM, by Teijin DuPont, Ltd.).

(Comparative Example 4)

It was attempted to fabricate a PP molded body under the conditions shown in Table 1 by the same procedure as Example 11, except for using a PP film (trade name: PYLEN FILM by Toyobo, Ltd.).

(Comparative Example 5)

It was attempted to fabricate a PVDF molded body under the conditions shown in Table 1 by the same procedure as Example 11, except for using a polyvinylidene fluoride (hereunder abbreviated as "PVDF") film (Kureha Corp.).

(Observation of etching state)

The surfaces and cross-sections of the films fabricated in the examples and comparative examples were observed with a scanning electron microscope (hereunder abbreviated as "SEM"). The observation results are shown in Table 1. The denotations in the table are A: Perforations formed corresponding to 300 mesh openings, B: Recesses (indentations) formed corresponding to 300 mesh opening, C: Recesses (indentations) formed only by etching at PGA sections near surface, D: No etching.

[Table 1]

| | Polymer | Thickness (μm) | Etching conditions | | | | Etched condition |
|---|---|---|---|---|---|---|---|
| | | | Voltage (kV) | Current (mA) | Output (W) | Time (min) | |
| Example 1 | PGA | 13.5 | 1.5 | 1.5 | 2.3 | 30 | B |
| Example 2 | PGA | 13.5 | 1.5 | 2.0 | 3.0 | 30 | B |
| Example 3 | PGA | 14.0 | 1.5 | 2.5 | 3.8 | 30 | B |
| Example 4 | PGA | 13.5 | 1.5 | 3.0 | 4.5 | 30 | B |
| Example 5 | PGA | 12.5 | 2.0 | 3.0 | 6.0 | 30 | B |
| Example 6 | PGA | 13.5 | 1.5 | 2.5 | 3.8 | 45 | B |
| Example 7 | PGA | 13.5 | 1.5 | 2.5 | 3.8 | 60 | A |
| Example 8 | PGA | 14.0 | 1.5 | 1.5 | 2.3 | 60 | B |
| Example 9 | PGA | 13.5 | 1.5 | 1.0 | 1.5 | 80 | A |
| Example 10 | PGA | 15.0 | 1.5 | 1.5 | 2.3 | 2 | C |
| Example 11 | PGA/PET | 15.0 | 1.5 | 1.5 | 2.3 | 2 | C |
| Example 12 | PGA/PP | 16.0 | 1.5 | 1.5 | 2.3 | 2 | C |
| Example 13 | PGA/PLA | 15.2 | 1.5 | 1.5 | 2.3 | 2 | C |
| Comp. Ex. 1 | PGA | 15.5 | 5.3 | 1.5 | 8.0 | 2 | D (discharge) |
| Comp. Ex. 2 | PGA | 13.1 | 0.3 | 1.5 | 0.5 | 120 | D |
| Comp. Ex. 3 | PET | 12.0 | 1.5 | 1.5 | 2.3 | 60 | D |
| Comp. Ex. 4 | PP | 13.0 | 1.5 | 1.5 | 2.3 | 60 | D |
| Comp. Ex. 5 | PVDF | 15.0 | 1.5 | 1.5 | 2.3 | 60 | D |

Formation of recesses corresponding to 300 mesh openings was confirmed in the PGA molded bodies fabricated in Examples 1-10. In contrast, discharge occurred and etching could not be performed in Comparative Example 1, while the output was insufficient to form recesses in Comparative Example 2.

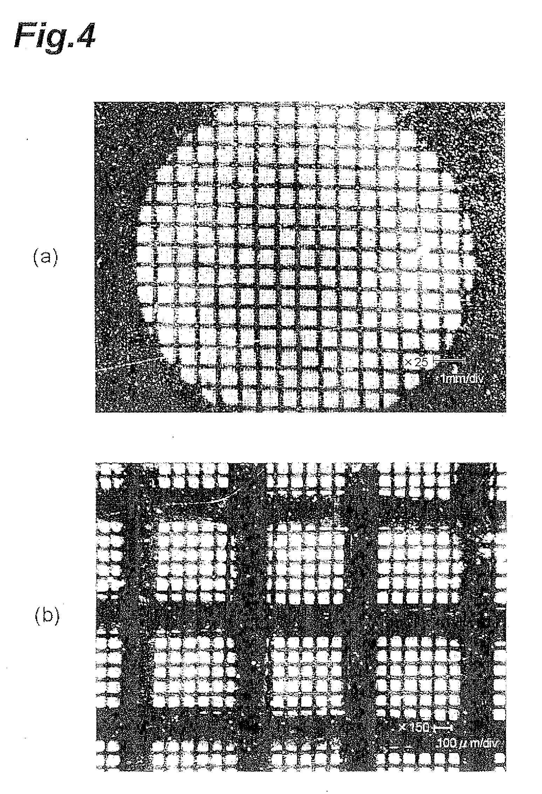

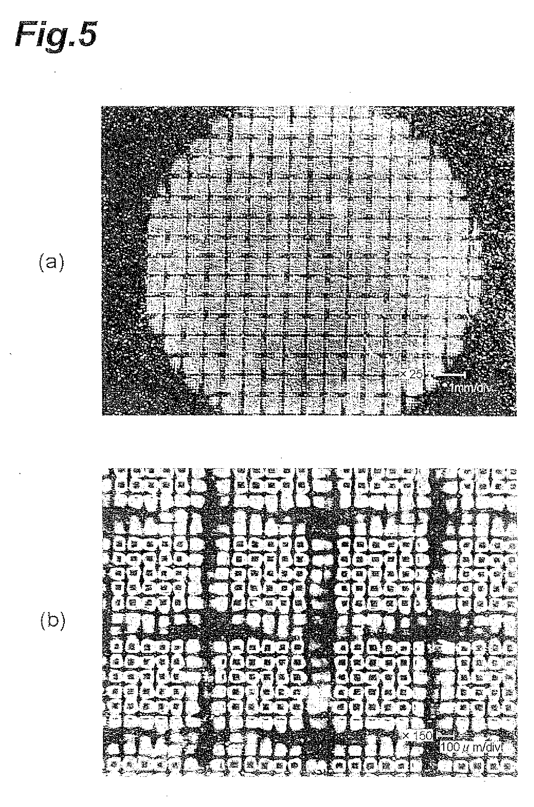

As representative SEM photographs for Examples 1-10, a SEM photograph taken from the etching surface of the PGA molded body fabricated in Example 1 is shown in Fig. 4, and a SEM photograph taken from the etching surface of the PGA molded body fabricated in Example 7 is shown in Fig. 5. In Figs. 4 and 5, the image shown as (b) is a magnified view of the image shown as (a).

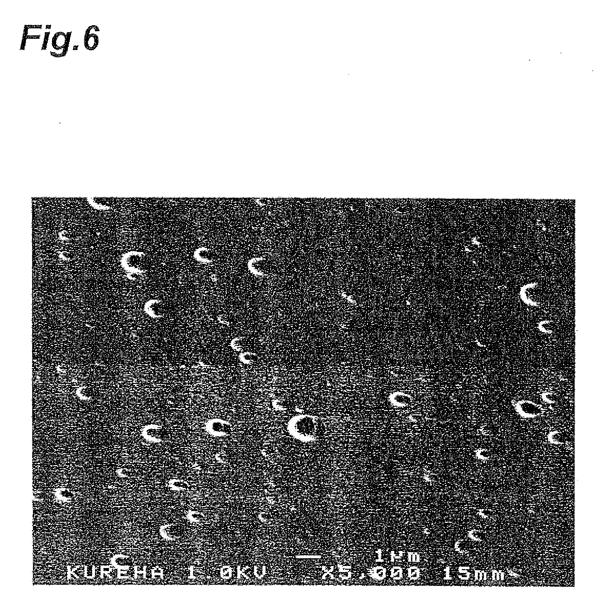

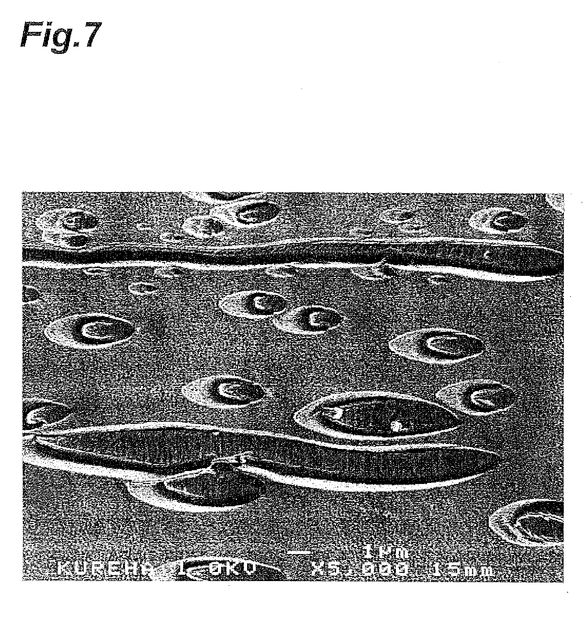

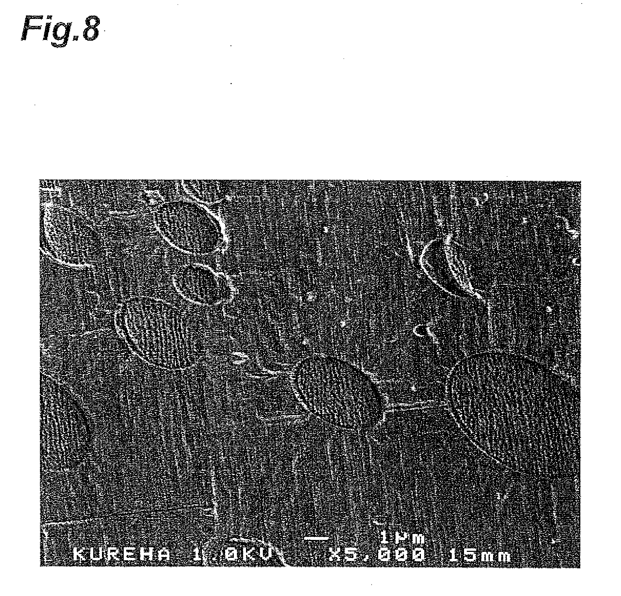

Fig. 6 is a SEM photograph of the PGA/PET molded body obtained in Example 11, taken from the etching surface, Fig. 7 is an SEM photograph of the PGA/PP molded body obtained in Example 1.2, taken from the etching surface, and Fig. 8 is an SEM photograph of the PGA/PLA molded body obtained in Example 13, taken from the etching surface. In Figs. 6 to 8 it can be seen that recesses have been formed near the surface. Thus, it was demonstrated that when a blend film of PGA and a polymer other than PGA is used as in Examples 11-13, only the PGA present near the surface (etching side) is selectively etched.

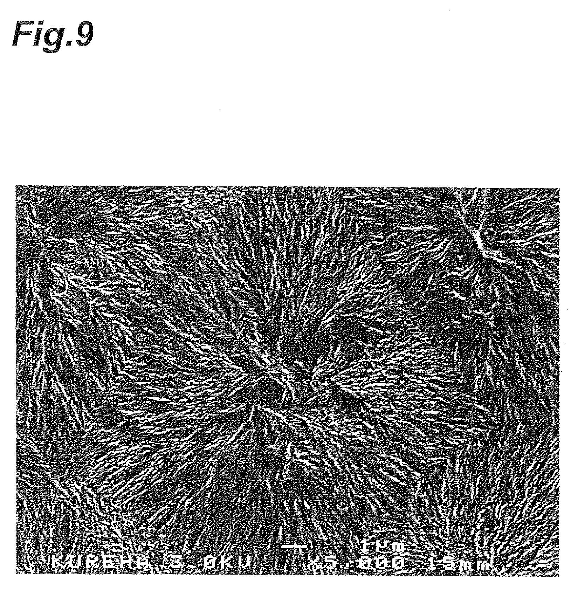

Fig. 9 is an SEM photograph of the etched PVDF film of Comparative Example 5, taken from the etching surface. As seen in Fig. 9, no recesses formed in the PVDF film. This demonstrated that in a polymer molded body containing no PGA, as in the case of Comparative Examples 3-5, it is not possible to form recesses by dry etching under the conditions of the production method of the invention.

These results show that the method for producing a polymer molded body according to the invention can form recesses in a polyglycolic acid-containing polymer structure by a simple process, without complex steps such as employed in photoresist processes. In addition, a PGA molded body with recesses can be produced if the polymer structure consists entirely of PGA. Furthermore, when the polymer structure is composed of PGA and a polymer other than PGA, it is possible to produce a polymer molded body having recesses termed by etching of the PGA sections near the surface.

**Industrial Applicability**

According to the invention it is possible to provide a method for producing a polymer molded body that can form recesses in a polyglycolic acid-containing polymer structure, as well as a polymer molded body obtained by the method.

**Claims**

1. A method for producing a polymer molded body, comprising:

   a step of forming a recess in a polymer structure containing a polyglycolic acid by dry etching the polymer structure at a vacuum degree of 50 mTorr or less, an output of 1-6 W and a current of 3 mA or less.

2. The method according to claim 1, wherein the dry etching is argon ion etching.

3. A polymer molded body obtainable by the method according to claim 1 or 2.

*Fig.1*

# Fig.2

(a)

6

4

2

(b)

6
4
2

8

(c)

6
4
2

1

(d)

*Fig.3*

Fig.4

(a)

(b)

# Fig.5

(a)

(b)

*Fig.6*

Fig.7

Fig.8

*Fig.9*

## INTERNATIONAL SEARCH REPORT

| International application No. |
|---|
| PCT/JP2009/050682 |

A. CLASSIFICATION OF SUBJECT MATTER
*C08J7/00(2006.01)i*

According to International Patent Classification (IPC) or to both national classification and IPC

B. FIELDS SEARCHED

Minimum documentation searched (classification system followed by classification symbols)
C08J7/00-02, 12-18, B29C59/00-18, 71/04

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-246873 A (Konica Corp.), 05 September, 2003 (05.09.03), Full text (Family: none) | 1-3 |
| A | JP 2006-506474 A (E.I. Du Pont De Nemours & Co.), 23 February, 2006 (23.02.06), Full text & EP 1549481 A1 & WO 2004/033190 A2 | 1-3 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 February, 2009 (20.02.09) | 03 March, 2009 (03.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9296057 A
- JP 2001305750 A
- JP 60111243 A
- JP 62267336 A
- JP 5086216 A
- JP 5015987 A
- JP 6198598 A